Europäisches Patentamt

European Patent Office

Office européen des brevets

(11) Publication number: **0 082 496**

**A1**

(12) **EUROPEAN PATENT APPLICATION**

(21) Application number: **82111723.1**

(22) Date of filing: **17.12.82**

(51) Int. Cl.³: **B 62 K 25/20**

(30) Priority: **18.12.81 JP 205804/81**
**18.12.81 JP 205805/81**

(43) Date of publication of application:
**29.06.83 Bulletin 83/26**

(84) Designated Contracting States:
**BE DE**

(71) Applicant: **Yamaha Motor Co., Ltd.**
**2500 Shingai**
**Iwata-shi Shizuoka-ken(JP)**

(72) Inventor: **Ohsemachi, Shigeru**
**45-5 Funakoshi-cho**
**Hamamatsu-shi Shizuokaken(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Shock absorbing device for the rear wheel of a two-wheeled vehicle.**

(57) A shock absorbing device (23) for a two-wheeled vehicle in which the pivotably mounted end of a rear arm (8) on which a rear wheel is supported, is positioned substantially horizontally in the vicinity of the pivotally mounted arm end so that the shock absorber may have a small overwhole height. In a preferred embodiment the shock absorber is positioned in such a manner that its longitudinal axis may extend transversely of a body frame (1). The invention provides a larger vacant space within the body frame of the two-wheeled vehicle than any conventional device.

Fig.3

Croydon Printing Company Ltd.

GRÜNECKER, KINKELDEY, STOCKMAIR & PARTNER

PATENTANWÄLTE
EUROPEAN PATENT ATTORNEYS

A GRUNECKER, DR ING
DR H KINKELDEY DR PHI
DR W STOCKMAIR DR PHI AEL KALTEH
DR K SCHUMANN, DR PHYS
P H JAKOB, DR ING
DR G BEZOLD, DR CHEM
W MEISTER, DR ING
H HILGERS, DR ING
DR H MEYER-PLATH DR ING

8000 MÜNCHEN 22
MAXIMILIANSTRASSE 43

## SHOCK ABSORBING DEVICE FOR THE REAR WHEEL OF A TWO-WHEELED VEHICLE

This invention relates to a shock absorbing device for the rear wheel of a two-wheeled motor vehicle. More particularly, it is concerned with an improved shock absorbing device of the mono-shock type in which a single shock absorber is provided between a rear arm carrying a rear wheel and a body frame.

A conventional shock absorbing device of the mono-shock type usually extends upwardly from the front end of a rear arm and is connected to a body frame below a driver's seat, as disclosed in, for example, Japanese Laid-Open Patent Specification No. 15312/1980. It extends through the center of the body frame, and occupies a large space longitudinally thereof. Accordingly, the body frame has only a narrow space left below the seat. This gives rise to limitations to the design of the vehicle, including the provision of the space for the installation of a battery and other electrical parts, or an air cleaner and other large parts.

This invention has been made to eliminate the afore-said difficulty, and is characterized by the horizontal positioning of a shock absorber in the area in

BAD ORIGINAL

which a rear arm is supported on a body frame, the opposite ends of the shock absorber being connected to the transversely opposite sides, respectively, of the rear arm, so that the shock absorber may have a small overall height.

In particular this invention has been made to eliminate the aforesaid problems, and is characterized by the positioning of a shock absorber in such a manner that its longitudinal axis may extend transversely of a body frame.

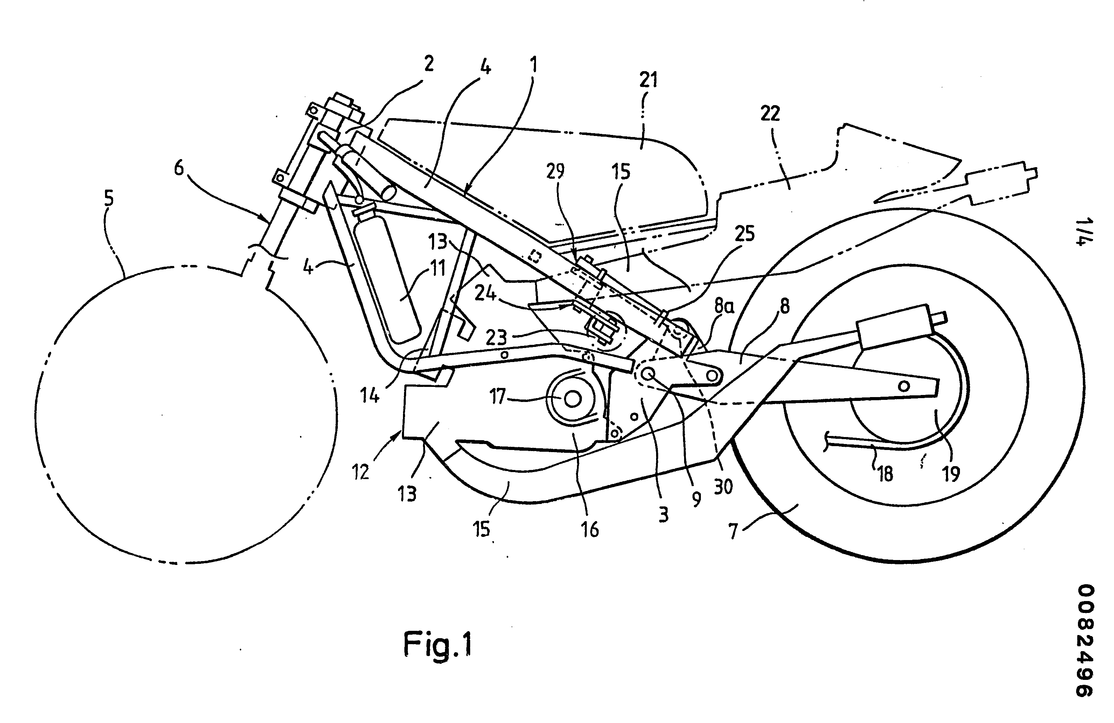

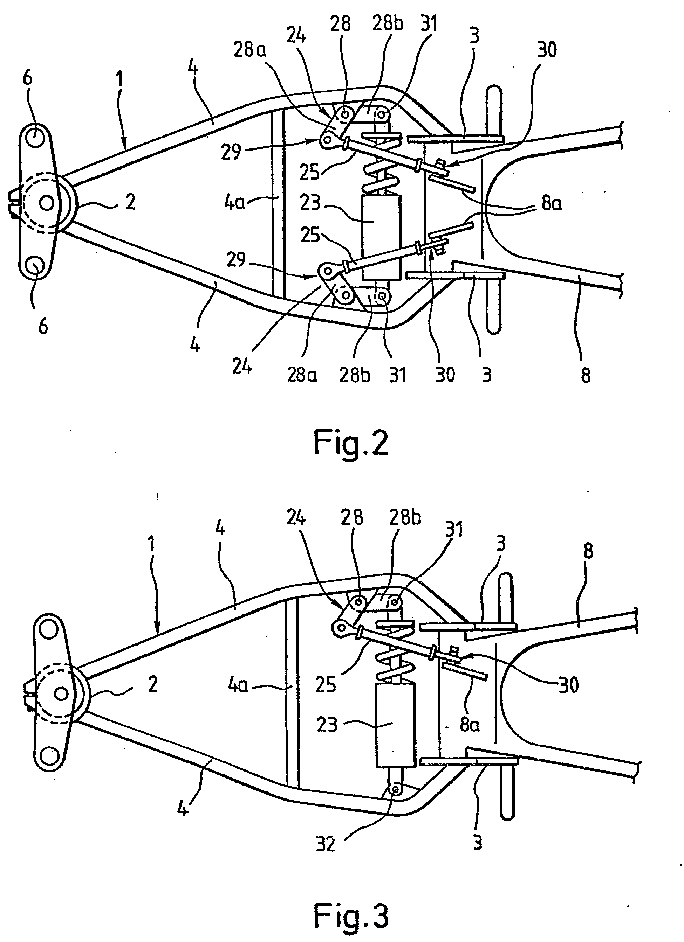

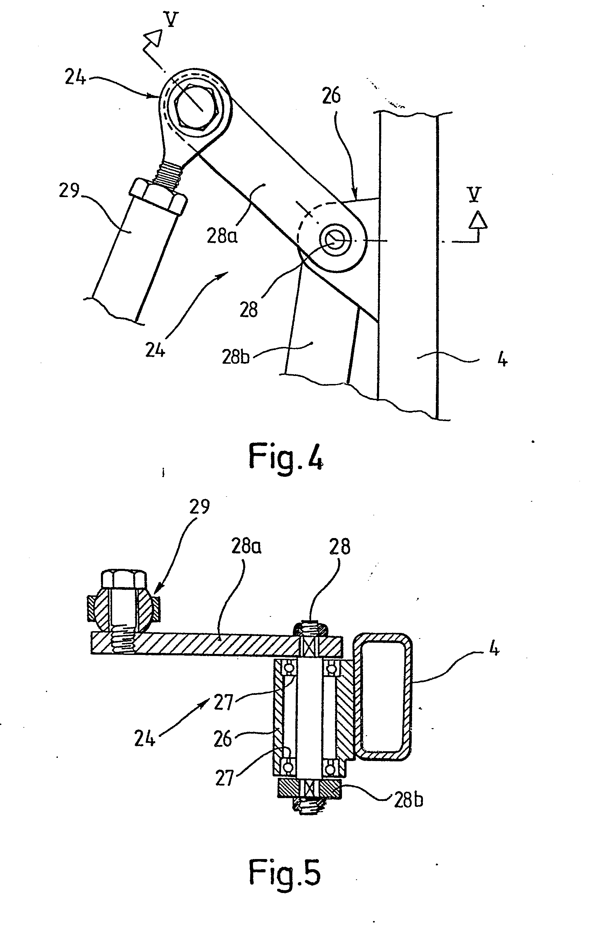

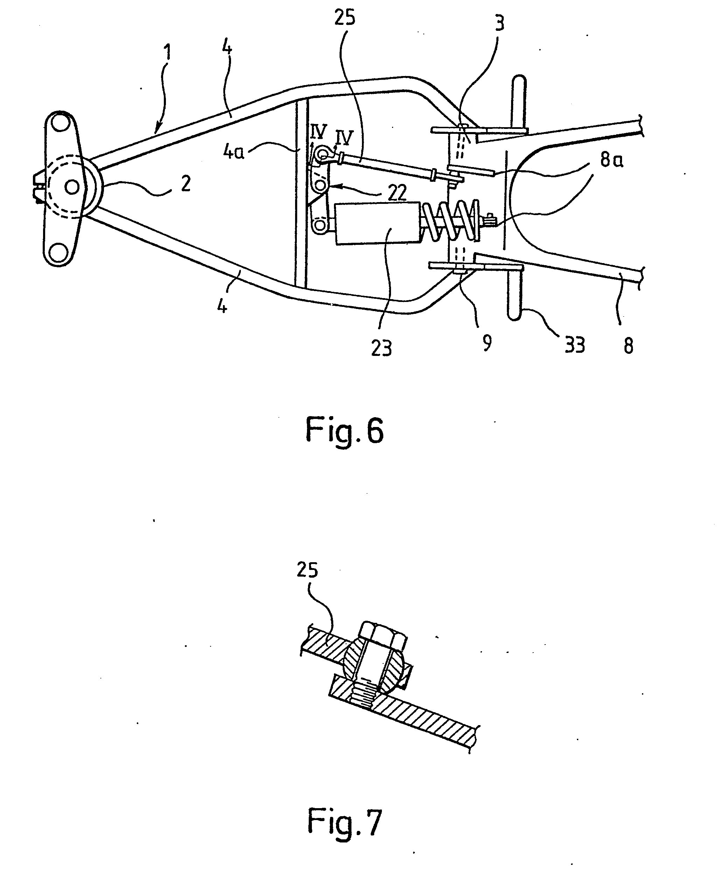

The invention will now be described by way of examples with reference to the drawings in which FIGURE 1 is a side elevational view of a two-wheeled motor vehicle to which this invention is applied, FIGURE 2 is a fragmentary top plan view thereof, FIGURE 3 is a view similar to FIGURE 2, but showing a first modification, FIGURE 4 is an enlarged top plan view of a link 24, FIGURE 5 is a sectional view taken along the line V-V of FIGURE 4, FIGURE 6 is a view similar to FIGURE 3, but showing a second modification, and FIGURE 7 is a sectional view taken along the line IV-IV of FIGURE 6. A two-wheeled motor vehicle has a body frame 1 which comprises a pair of extruded tubular members 4 of an aluminum alloy having a square cross section and extending between a steering shaft 2 at their front end and a bracket 3 at their rear end, and a cross member 4a connected between the tubular members 4. The steering shaft 2 has a lower end by which a front fork 6 carrying a front wheel 5 is rotatably supported. A rear arm 8 carrying a rear wheel 7 is vertically rotatably supported by a pivot shaft 9 on the bracket 3. A radiator 11 for cooling an engine is provided adjacent to the front end of the body frame 1. The water-cooled V-type engine 12 is suspended below the body frame 1, and comprises a pair of vertically spaced apart cylinders 13 disposed to define a V-shaped configuration, a carburetor 14 disposed between the cylinders 13, and exhaust pipes 15 extending rearwardly from the cylinders 13. A gear box 16 is disposed behind the cylinders, and forms an integral part of a crank chamber. A sprocket 17 is provided on an output shaft, and connected by a chain 18 to a driven sprocket 19 on the rear wheel 7 to drive the sprocket 19. A fuel tank 21 is mounted on the body frame 1. Numeral 22 designates a driver's seat.

A shock absorbing device is provided between the body frame 1 and the rear arm 8. It comprises a conventionally known shock absorber 23 including a coil spring assoicated with a hydraulic damper. Each end of the shock absorber 23 is connected to a bracket 8a projecting from the rear arm 8 by a link 24 supported rotatably on one of the aluminum alloy tubular members 4 and a turnbuckle rod 25. Each link 24 comprises an upper arm 28a connected to the upper end of a shaft 28 rotatably supported by ball bearings 27 in a bearing tube 26 welded to the tubular member 4, and a lower arm 28b connected to the lower end of the shaft 28, as shown in FIGURES 4 and 5. The upper arm 28a is connected to the rod 25 by a ball joint 29, and the other end of the rod 25 is connected to the bracket 8a by a similar ball joint 30. The lower arm 28b is connected to the shock absorber 23 by a pin 31 (FIGURE 2). The shock absorber 23 is compressed between the links 24, and urges the rear arm 8 downwardly through the rods 25. The cross member 4a also serves to prevent the tubular members 4 from being expanded by the spring force of the shock absorber, and is therefore preferably located close to the shock absorber.

In operation, if the rear wheel 7 rides over a projection on a road while the vehicle is running, the rear arm 8 is rotated upwardly, and the rods 25 move toward the shock absorber 23 to rotate the links 24. A compressive force is, therefore, applied to both ends of the shock absorber 23 simultaneously to compress it by a distance which is equal to twice as large as the stroke of operation of each link. Therefore, the shock absorber provides a relatively large damping force, even if the spring force is relatively mild. This invention is not limited to the embodiment as hereinabove described, but also covers a shock absorber 23 having one end fixed rotatably by a pin 32 to the body frame 1 as shown in FIGURE 3.

According to the second modification (FIGURE 6) of the invention, the shock absorber 23 has one end connected to one of a pair of transversely spaced apart brackets 8a projecting from the base end of the rear arm 8 by a link system 24 carried on the body frame 1, and a turnbuckle rod 25. The other end of the shock absorber 23 is connected to the other of the brackets 8a by another combination of a link system 22 and a rod 25, or directly to the corresponding bracket by a spherical joint as generally shown in FIGURE 7. If the shock absorber 23 is mounted transversely of the body frame 1 as shown in FIGURE 2, both ends thereof are connected to the link system 24, but if the shock abosorber 23 is mounted in parallel to the direction in which the vehicle runs, as shown in FIGURE 6, its rear end does not necessarily require any such link system. FIGURE 6 also shows a pair of step bars 33.

In operation, if the rear wheel rides over a projection on a road while the vehicle is running, the rear arm 8 is rotated upwardly, and its brackets 8a impart a compressive force to the shock absorber 23 through the rods 25 and the link system 22. The shock absorber 23 shows a quicker response to any impact, since the same stroke of its movement can be achieved by a smaller amount of movement of the links 22.

According to this invention, as the shock absorber is positioned substantially horizontally in the vicinity of the base end of the rear arm, the shock absorbing device is reduced in height and longitudinal dimensions, and does not interfere with the air cleaner or any other large part disposed behind the engine. Since the shock absorber, which is heavy, is positioned at a lower level of height, the vehicle has a lower center of gravity, and can be steered more smoothly and quickly. Since the shock absorber has one end connected to one transverse side of the rear arm by a link system carried on the body frame, while the other end of the shock absorber is connected to the other side of the rear arm, the links connecting the shock absorber to the rear arm can be situated at a low level of height relative to the body frame. Since the rear arm actuates the shock absorber simultaneously at both ends thereof, a large stroke of operation of the shock absorber can be obtained from a relatively small amount of operation of the link system and the rod.

According to a preferred embodiment of this invention, the shock absorber has a longitudinal axis extending transversely (FIGURES 2 & 3) of the body frame on which it is supported, and at least one end of the shock absorber is connected to the rear arm by a link mechanism. Therefore, the device of this invention provides a larger vacant space within the body frame than any conventional device including a shock absorber extending longitudinally through the center of the body frame, and facilitates the installation of large parts, such as an air cleaner and a battery. According to this invention, the shock absorber occupies only a limited space both vertically and longitudinally of the vehicle, and is easy to install in any appropriate location.

Although the opposite ends of the shock absorber may sometimes project beyond the lateral edges of the body frame, there does not result any technical problem in particular, since they usually terminate in dead spaces.

If the shock absorber is positioned immediately above the gear box as hereinbefore described, the shock absorber, which is heavy, can be situated in the bottom center of the vehicle body. The vehicle has a lower center of gravity, and the shock absorber is situated close to the center of gravity of the vehicle. The vehicle is easy to turn and steer, and the shock absorbing device as a whole can be small and light, since the rods 25 are short.

The present invention offers the desirable possibility to employ as large a shock absorber stroke as possible to obtain a large damping force while reducing to a remarkable extent the space required for the installation of the shock absorber.

**0082496**

CLAIMS:

1.    A shock absorbing device for a two-wheeled vehicle in which the base end of a rear arm (8) having another end on which a rear wheel (7) is supported, is pivotally mounted on the rear end of a body frame (1), the pivotally mounted portion of said rear arm being connected to said body frame by a shock absorber (23), characterised in that said shock absorber (23) is positioned substantially horizontally in the vicinity of said base end of said rear arm (8) on said body frame (1), one end of said shock absorber being connected to one side of said rear arm by a link system (24, 22) carried on said body frame.

2.    A shock absorbing device as set forth in claim 1, characterised in that said shock absorber (23) is supported on said body frame (1) in such a manner, that its longitudinal axis extends transversely of said body frame (1).

3.    A shock absorbing device according to claim 1, characterised in that the other end of said shock absorber (23) is connected to the other side of said rear arm (8).

0082496

Fig.1

0082496

Fig.2

Fig.3

**Fig.4**

**Fig.5**

Fig.6

Fig.7

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | CH-A- 87 687 (RIGBY) <br> *Figures 4,5; page 2, right-hand column, line 46 - page 3, left-hand column, line 15* | 1,3 | B 62 K 25/20 |
| Y | FR-A-2 306 122 (DONCQUE) <br> *Figures 4-6; the complete text* | 1-3 | |
| A | US-A-3 948 543 (MacDONALD) <br> *Figures 6-8; column 4, lines 1-13* | 1 | |
| A | GB-A-2 037 678 (MATTHEWS) <br> *Figure 3; page 1, right-hand column, line 117 - page 2, line 8* | 1 | |
| A | US-A-3 966 006 (CULLINAN) <br> *Column 1, lines 12-35* | 2 | TECHNICAL FIELDS SEARCHED (Int. Cl. ³) <br><br> B 62 K |

The present search report has been drawn up for all claims

| Place of search | Date of completion of the search | Examiner |
|---|---|---|
| THE HAGUE | 17-03-1983 | GEMMELL R.I.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82